# EUROPÄISCHE PATENTSCHRIFT

(11) **EP 1 996 391 B1**
(45) Veröffentlichungstag und Bekanntmachung des Hinweises auf die Patenterteilung: **18.03.2015**
(21) Anmeldenummer: 07703845.3
(22) Anmeldetag: 15.01.2007
(51) Int. Cl.: B29C 71/04, B32B 27/32, B29C 51/00, B29C 59/04

(54) **VERFAHREN ZUR HERSTELLUNG EINER THERMOPLASTISCHEN FOLIE**
METHOD FOR PRODUCING A THERMOPLASTIC FILM
PROCEDE DE FABRICATION D'UNE FEUILLE THERMOPLASTIQUE

(30) Priorität: 10.03.2006 DE 102006011159
(43) Veröffentlichungstag der Anmeldung: 03.12.2008
(73) Patentinhaber: Benecke-Kaliko AG, 30419 Hannover (DE)
(72) Erfinder: BÜHRING, Jürgen, 30900 Wedemark (DE)
(74) Vertreter: Finger, Karsten
(86) Internationale Anmeldenummer: PCT/EP2007/050325
(87) Internationale Veröffentlichungsnummer: WO 2007/104588

(56) Entgegenhaltungen:
- DE-A1- 10 018 196
- DE-A1- 10 356 665
- DE-A1-102005 009 415
- US-A- 4 740 335

## Beschreibung

Die Erfindung betrifft ein Verfahren zur Herstellung einer thermoplastischen Folie mit einer dreidimensional strukturierten Oberfläche, wobei die bereits in einem vorlaufenden Formgebungsschritt mit einer Oberflächenstruktur versehene Folie einem weiteren nachfolgenden formgebenden Verarbeitungsschritt unterworfen wird, insbesondere einem formgebenden Tiefziehen, bei dem die Folie ihre Bauteilform erhält. Ebenfalls betrifft die Erfindung eine Folie für einen formgebenden Verarbeitungsschritt.

Der vorlaufende Formgebungsschritt, bei dem die Folie mit einer Oberflächenstruktur versehene wird, besteht in aller Regel aus einem Prägeverfahren. Als nachfolgenden formgebenden Verarbeitungsschritt kennt man dabei neben dem Tiefziehen natürlich eine Reihe weiterer Umformverfahren, wie etwa Drück- oder Pressverfahren, bei denen die Folie gegen Formen gepresst wird und ihre Bauteilform erhält.

Thermoplastischen Folie mit einer dreidimensional strukturierten, geprägten Oberfläche, also etwa genarbte, gemusterte, oder fein strukturiert Formhäute aus Kunststoffen sind als Oberflächen für Gegenstände weithin bekannt und werden z. B. verwendet für die Innenverkleidung in Fahrzeugen, hier oft als relativ weiche unterschäumte Folien, so genannte Schaumfolien, mit angenehmer Haptik etwa für die Verkleidung von Armaturenbrettern oder die Innenschalen von Türen etc. In entsprechender Anpassung von Festigkeit und Design werden solche Folien natürlich auch für andere hochwertig beschichtete Waren genutzt.

Im Stand der Technik sind zur Herstellung solcher Formhäute verschiedene Verfahren bekannt, zum Beispiel Walzverfahren zur Herstellung von "endlosen" Folienbahnen oder auch Verfahren zur Herstellung von werkzeugfallenden einzelnen Formhäuten. Hier sind jedoch im Weiteren die Walzverfahren angesprochen, bei denen eine thermoplastische Folie mit Hilfe einer Prägewalze mit einer Oberflächenstruktur versehen wird.

Dem Fachmann ist in Bezug auf nachfolgende Verformungsverfahren das Problem bekannt, dass beim Aufbringen einer Folie auf ein dreidimensionales Bauteil, also etwa bei einem Ziehvorgang, bei dem eine mit einer einheitlich geprägten Oberfläche versehene Folie in ein Formwerkzeug gezogen (Tiefziehen) oder über einen festen Träger oder Grundkörper gespannt wird, es natürlich zu Verformungen der Folie kommen kann, die über die Elastizitätsgrenze des Materials, aus dem das Werkstück besteht, hinausgehen. Es können dabei Verzerrungen durch sich ändernde Abstände zwischen einzelnen Oberflächenbereichen entstehen, die dem Betrachter als Unregelmäßigkeiten sofort auffallen. Da im Bereich des Automobilinterieurs ein starker Trend zur Verbesserung der Qualitätsanmutung zu beobachten ist, sind solche Unregelmäßigkeiten immer weniger akzeptabel.

Die DE 102 02 752 offenbart hierzu ein Verfahren zur Herstellung eines aus einer thermoplastischen Folie tiefgezogenen Formteiles, bei dem die Oberflächenstruktur der Prägewalze in den Bereichen verdichtet bzw. verkleinert wird, in denen beim Tiefziehvorgang eine Dehnung der thermoplastischen Folie erfolgt. Durch diese Kompensation entsteht dann beim Tiefziehen ein gleichmäßiges Oberflächenmuster. Hier muss jedoch die Prägewalze bzw. die als Negativ dienende äußere Walzenoberfläche in Form eines Silikonschlauches auf relativ aufwendige Weise bearbeitet werden, um die kompensierenden Musterverdichtungen einzustellen.

Die DE 100 18 196 A1 beschreibt ein Verfahren zur Herstellung einer genarbten Folie aus unvernetzten Polyolefinen, die zur Erhöhung der Narbfestigkeit mit Elektronenstrahlen behandelt wird und dann tiefgezogen wird. Da Durch ein solches Verfahren die Folie insgesamt eine stabilere und damit weniger verformbare Narbe aufweist, wird lediglich die Dehnung insgesamt erniedrigt, das Problem der erforderlichen unterschiedlichen Dehnung einzelner Bereiche der Folie aber nicht zufriedenstellend gelöst.

Die DE 103 56 665 A1 offenbart ein Verfahren zur Herstellung von genarbten Formkörpern, welches zum Erzielen einer im Tiefziehprozess geeigneten Narbstabilität mit Elektronenstrahlen behandelt wird.

Die US 4,740,335 offenbart ein Herstellungsverfahren für einen Gegenstand in Filmform mit geprägter Oberfläche, bei dem der Gegenstand erwärmt, danach geprägt und anschließend und nach Abkühlung durch hochenergetische Strahlung vernetzt wird.

Für die Erfindung bestand daher die Aufgabe, ein kostengünstiges Verfahren vorzustellen, mit dem eine für nachfolgende formgebende Verarbeitung, insbesondere für ein Tiefziehen geeignete Folie hergestellt werden kann, die unterschiedliche Verformungen / Dehnungen über der einzelne Flächenbereiche der Folie erlaubt, ohne sichtbare Verzerrungen durch sich ändernde Abstände zwischen einzelnen Oberflächenstrukturen erkennbar werden zu lassen.

Gelöst wird diese Aufgabe durch die Merkmale des Hauptanspruchs. Vorteilhafte Weiterbildungen sind in den Unteransprüchen enthalten. Ebenfalls offenbart ist eine thermoplastische Folie, welche dem Verfahren in besonderer Weise Rechnung trägt.

Hierbei wird die Folie, die in der Regel extrudiert, bereits geprägt und ggf. auch schon lackiert wurde, vor dem nachfolgenden formgebenden Verarbeitungsschritt einer Elektronenstrahlvernetzung unterworfen, die einzelne flächige Bereiche der Folie unterschiedlich und im Wesentlichen auf eine solche Weise vernetzt, dass die Bereiche, die bei dem nachfolgenden formgebenden Verarbeitungsschritt höheren Auszugsgraden unterworfen werden, andere Vernetzungsgrade aufweisen als ihre Nachbarbereiche.

Die Vernetzung von Polymeren entsteht durch Ausbildung kovalenter Bindungen zwischen den Polymerketten. Üblicherweise erfolgt die Vernetzung durch die klassische Vulkanisation mit elementarem Schwefel oder Silanen, durch die Peroxidvernetzung, durch die Vernetzung mit Elektronenstrahlen, oder durch eine Kombination der Verfahren. Bei der Elektronenstrahlenvernetzung entstehen die den Vernetzungsprozess startenden Radikale durch die Einwirkung energiereicher Strahlung auf die Polymermoleküle. Dabei gehen die beschleunigten Elektronen Wechselwirkungen mit den bestrahlten Molekülen ein. Durch elastische Stöße wird die kinetische Energie der Elektronen auf Atome des Molekülverbundes übertragen. Die betroffenen Atome werden dadurch in einen höheren Anregungszustand überführt. Ist die so zugeführte Energie größer als die Bindungsenergie der kovalenten Bindungen, so wird die Bindung gespalten und es entstehen Radikale, Makroradikale und Ionen.

Die Radikale reagieren in Folgereaktionen mit den Molekülen der Polymerketten oder sich selbst und führen sowohl zur Ausbildung kovalenter Bindungen zwischen den einzelnen Ketten, als auch zum Abbau der Makromoleküle durch Kettenspaltung. Kettenspaltung und Kettenaufbau laufen parallel. Es hängt dabei vom verwendeten Polymertyp und den Verarbeitungsbedingungen wie Strahlendosis, Art der Strahlung, Temperatur, etc. ab, welche Reaktion dominiert. Die Einstellung der Verfahrensparameter bei der Elektronenstrahlvernetzung ist daher von elementarer Wichtigkeit. Da auch ein Kettenabbau stattfindet, ist eine Vernetzung aller vorhandenen Polymerketten miteinander nicht realisierbar. Obwohl durch Strahlenvernetzung eine vollständige Vernetzung nicht erreicht wird, werden dennoch Hauptmerkmale der bestrahlten Polymere stark beeinflusst.

Die bei einer durch Elektronenstrahlen induzierten Vernetzung neu entstandenen Vernetzungsstellen behindern den Faltvorgang der Polymerketten. Dadurch kommt es zu einer Erniedrigung des Kristallinitätsgrades, wobei insbesondere die mechanische Festigkeit und Sprödigkeit mit sinkendem Kristallinitätsgrad abnehmen, während Zähigkeit und Dämpfungseigenschaften zunehmen. Tatsächlich tritt in den meisten Fällen jedoch eine durch die Erniedrigung des Kristallinitätsgrades zu erwartende Abnahme der Festigkeit nicht auf. Der Grund hierfür ist, dass die geringere Kristallinität durch die gesteigerte Strukturfestigkeit der vernetzten amorphen Bereiche überkompensiert wird. Die Kohäsionskräfte zwischen den vernetzten Polymerkettensegmenten sind um ein Vielfaches größer als im unvernetzten Zustand, wo lediglich van der Waalsche Wechselwirkungskräfte zwischen den Ketten wirken. Das Abgleiten und Verlagern der Polymerketten wird durch das Vernetzen wesentlich erschwert. Diese Veränderungen äußern sich beispielsweise durch eine Zunahme der mechanischen Festigkeit und der Wärmeformbeständigkeit.

Dadurch, dass die Bereiche, die bei dem nachfolgenden formgebenden Verarbeitungsschritt höheren Auszugsgraden unterworfen werden, andere Vernetzungsgrade aufweisen als ihre Nachbarbereiche, insbesondere und vorteilhafterweise höhere Vernetzungsgrade, verbleibt auch nach dem nachfolgenden Verformungsschritt, zum Beispiel nach dem Aufbringen der Folie auf ein dreidimensionales Bauteil, eine außerordentlich gleichmäßige Oberflächenstruktur erhalten.

Dies kommt daher, dass die stark umgeformten Folienbereiche, d.h. zum Beispiel solche auf vorspringenden Geometrien mit engen Radien, sich stärker dehnen als die Nachbarbereiche und daher die Verformungsspannungen in die Nachbarbereich übertragen. Über die gesamte Fläche gesehen ergibt sich dann eine Vergleichmäßigung der Oberflächenspannung der Folie nach der Verformung. Dadurch bleibt auch die Oberflächenstruktur im Wesentlichen erhalten, jedenfalls aber so, dass eine Veränderung nicht mit bloßem Auge merkbar ist. Bei den herkömmlichen Verfahren im Stand der Technik mussten die Bereiche mit höheren Auszugsgraden die gesamte Dehnung allein auffangen, wurden also z. B. um 60 % gedehnt, während die direkt daneben liegenden Bereiche nicht gedehnt wurden. Die Unterschiede in der Struktur waren somit oft erkennbar groß. Bei dem erfindungsgemäßen Verfahren wird durch die Vernetzung die Dehnung der Bereiche mit höheren Auszugsgraden stark reduziert, wodurch eine Übertragung der Umformspannungen auch auf die daneben liegenden Bereiche erfolgt, so dass beide Bereiche um etwa gleich Beträge von z. B. 25 - 30 % gedehnt werden. Damit sind Strukturunterschiede im Übergang der Bereiche wesentlich reduziert.

Eine über die Folienfläche inhomogene Verteilung der neu entstandenen Vernetzungsstellen, also der Vernetzungsdichteverteilung oder Netzbogendichte - beispielsweise ausgedrückt durch den Gelgehalt als bekanntes Maß für die Vernetzung - kann dadurch besonders vorteilhaft erreicht werden, dass die Folie von beiden Seiten einer Elektronenstrahlung ausgesetzt wird, wobei die Vernetzungsgrade auf den beiden Folienseiten bzw. Folienoberflächen unterschiedlich hoch sein können.

Hierdurch kann sowohl über die bestrahlte Fläche als auch über die Strahlungsintensität und die damit beeinflussbare Wirkung der Vernetzung in Dickenrichtung der Folie die Gesamtvernetzung einzelner Bereiche beeinflusst werden.

Bei einer einseitigen Bestrahlung kann dabei durch die Wahl der Beschleunigungsspannung für die Elektronen abhängig von der Foliendicke der Bereich der maximalen Dosisadsorption variiert und damit bei die Vernetzungsdichteverteilung definiert werden.

Im Falle der zweiseitigen Bestrahlung lässt sich die Vernetzungsdichteverteilung darüber hinaus durch die Relation der aufgebrachten Dosen unter Variation der jeweiligen Beschleunigungsspannung beeinflussen. Abhängig von den jeweiligen Zusammensetzungen der zu bestrahlenden Folien, sind diese für jedes chemische System neu anzupassen.

Eine vorteilhafte Weiterbildung besteht darin, dass die Elektronenstrahlvernetzung der Folie durch eine mindestens bereichsweise mehrfache Bestrahlung mindestens einer Folienoberfläche mit einer Elektronenstrahlquelle erfolgt. Damit lässt sich durch die einfache örtliche Steuerung der Strahlquelle bzw. des Elektronenstrahles bereits die gewünschte Unterschiedlichkeit in der Vernetzung erzeugen. Da die zu bearbeitenden Folien üblicherweise als Bahnenware vorliegen, wobei die Breite der Folienbahnen abhängig von der vorlaufenden Herstellung festgelegt ist, können im Rahmen der Erfindung natürlich verschiedene Bestrahlungsvarianten durchgeführt werden, die der weiteren Verarbeitung der Folienbahn angepasst sind. Wenn zum Beispiel feststeht, dass immer der mittlere Bereich einer Folienbahn derjenige ist, der bei der nachfolgenden Formgebung in den Bereich der Instrumentenhaube eines Armaturenbrettes fällt und damit die größten Auszugsgrade ertragen muß, wird eben dieser mittlere Bereich der Folie ein- oder mehrfach erfindungsgemäß vernetzt.

Eine weitere vorteilhafte Weiterbildung besteht darin, dass die Elektronenstrahlvernetzung der Folienoberfläche strichweise nacheinander durchgeführt wird, wobei die Strahlbreite des Elektronenstrahls mit Hilfe einer Blende einstellbar ist. Mit Hilfe eines solche "Scanning" lässt sich auf einfache Weise ein über die Folienbreite unterschiedlicher Vernetzungsgrad einstellen.

Dies gilt ebenso für eine weitere vorteilhafte Weiterbildung, die darin besteht, dass zwischen der der Elektronenstrahlquelle und der bestrahlten Folienoberfläche eine Maske angeordnet ist, die die Intensität der Elektronenstrahlung mindestens in Teilbereichen des Strahlquerschnitts verändert.

In besonderer Weise geeignet zur Verwendung in dem erfindungsgemäßen Verfahren ist eine thermoplastische Folie aus vernetzten polymeren Materialen mit einer dreidimensional strukturierten, geprägten Oberfläche, die aus einem thermoplastischen Elastomer, insbesondere einem thermoplastischen Olefin (TPO) oder einer Polyolefinmischung besteht.

Der besondere Vorteil der Nutzung dieser Polymerart bei dem erfindungsgemäßen Folie besteht darin, dass die ursprünglich vorhandene intermolekulare Vernetzung eines thermoplastischen Olefins (Wasserstoffbrücken, kristalline Strukturen) dominierend thermoreversibel und im Wesentlichen physikalischer Natur ist, was im Hinblick auf die Eignung für eine Verformung grundlegend ist. Die "zusätzliche" Elektronenstrahlvernetzung bestimmter Bereiche des Polyolefins stellt die besondere und überraschende Eigenschaft der Folie bereit, bei der während des üblicherweise in der Wärme erfolgenden Umformschrittes einerseits ein für die Umformung erforderliches Dehnverhalten und andererseits ein ausreichender Widerstand gegenüber zu großen Dehnungen der Oberfläche zur prozesssicheren Werkstoffhandhabung vorliegt.

Eine weitere vorteilhafte Weiterbildung besteht darin, dass die Folie aus vorvernetzten polymeren Materialen besteht, insbesondere aus einer Zusammensetzung von Polypropylen, Polyethylen, sowie deren Copolymeren und Terpolymeren, welche sich zur Verwendung als Folie für Kraftfahrzeuginterieur besonders eignen. Auch hierdurch ergibt sich nach dem sich anschließenden Verformungsschritt eine besonders gleichmäßige Oberflächenstruktur ohne auffällige Überdehnungen. Die Vorvernetzung erfolgt auf chemischem Wege durch Zugabe von üblichen Vernetzungsmitteln.

Eine weitere vorteilhafte Weiterbildung besteht darin, dass die Folie als mehrschichtiger Polymerfolienverbund ausgebildet ist. Eine solche Ausbildung unterstützt die beeinflussbare Wirkung der Vernetzung in Dickenrichtung der Folie und damit die Gesamtvernetzung einzelner Folienbereiche.

Die Bestandteile der Polymerfolien sind vorzugsweise Polyolefine. Das Spektrum der eingesetzbaren Polyolefine unterliegt dabei keiner prinzipiellen Einschränkung. Verwendet werden können vorzugsweise Polyolefine wie PP, PE, Poly(1-buten), Polyisobutylen, Poly(4-methylpenten), PP-Copolymere oder -Terpolymere mit C₂, C₄-C₁₂-α-Olefinen, PE-Copolymere oder -Terpolymere mit C₃ bis C₁₂-α-Olefinen oder Mischungen daraus, wobei als Co- oder Termonomer auch Dien-Monomere eingesetzt werden können, die nichtkonjugierte Doppelbindungen enthalten, wie z.B. 1,4-Hexadien, 5-Methyl-1,5-Hexadien, 5-Ethyliden-2-Norbonen, 5-Butyliden-2-Norbonen, Dicylopentadien, 1,4-Octadien, Cyclohexadien oder Cyclooctadien; Copolymere von Propylen und/oder Ethylen mit polaren Comonomeren wie Acrylsäure und/oder deren C₁-C₁₂-Estern, Methacrylsäure und/oder deren C₁-C₁₂-Estern, Ionomere auf Basis von Acrylsäure und/oder mit Methacrylsäure sowie Schwefelsäure, Vinylestern gesättigter C₁-C₈-Carbonsäuren, wahlweise mit Kohlenmonoxid als Termonomer; Pfropfcopolymere von Propylen und/oder Ethylen mit 8-45 % aufgepfropften Einheiten von ungesättigten Carbonsäuren, Dicarbonsäuren, deren Estern und/ oder Anhydriden sowie Gemische der genannten Polymere.

Eine weitere vorteilhafte Weiterbildung besteht darin, dass das die Folie eine Dicke von 0,4 bis 4 mm aufweist. Hierdurch wird die Einstellbarkeit der Vernetzungstiefe weiter erleichtert.

Mit dem Ziel einer guten Vergleichmäßigung der Dehnung wird die Vernetzung der Folie vorteilhafterweise so eingestellt, dass die Folie in den Bereichen, die bei dem nachfolgenden formgebenden Verarbeitungsschritt höheren Auszugsgraden unterworfen werden, einen Gelgehalt von mindestens 30 % aufweist, vorzugsweise einen Gelgehalt von 40 bis 60 %. Damit ist die Narbfestigkeit der gedehnten Bereiche der Folie ausreichend hoch, um eine Verzerrung der Oberflächenstruktur /Narbstruktur zu verhindern, wobei die den niedrigeren Gelgehalt aufweisenden anderen Bereiche der Folie genügend Dehnfähigkeit bereitstellen, um eine prozesssichere Verformung zur Bedeckung eines dreidimensionalen Bauteiles zu erreichen.

Eine vorteilhafte Ausbildung besteht darin, dass der Unterschied im Gelgehalt zwischen hoch- und niedrigvernetzten Bereichen der Folie 10 und 60 %, vorzugsweise 20 bis 50 % beträgt. Damit erreicht man eine ausreichende Vergleichmäßigung der Dehnungen des Materials auch bei stark verformten Bauteilen, wie beispielsweise bei Abdeckungen für den Kardantunnel eines PKW.

Die Bestimmung des Gelgehalts erfolgt üblicherweise über eine Extraktionsmethode, bei der zunächst Proben bei einer Dicke von etwa 0,5 mm in Quadrate einer Kantenlänge von etwa 1,0 mm geschnitten werden. Die Proben (etwa 100 mg) werden dann in Reagenzgläsern vorgelegt, welche mit Pfropfen aus rostfreiem Stahldraht versehen sind, die ein Aufschwimmen der Proben verhindern. Die Reagenzgläser werden mit 100 ml Xylol gefüllt und mit Alufolie verschlossen, um ein Abdampfen des Lösungsmittels zu verhindern. Das Xylol wird dann zum Sieden erhitzt. Die Probekörper lässt man etwa 24 h im siedenden Xylol. Anschließend wird das Gel-Xylol-Gemisch über eine Siebtrommel mit einer Maschenweite von 200 mesh filtriert, wobei das Gel in der Siebtrommel verbleibt. Die Siebtrommeln werden auf Metallplatten gestellt und bei 140°C für 3 h im Umluftofen getrocknet. Nach Abkühlen auf Raumtemperatur wird der Gehalt ausgewogen und zur Einwaage ins Verhältnis gesetzt.

Besonders vorteilhaft lässt sich das vorgenannte Herstellungsverfahren nutzen für ein Armaturenbrett zur Innenverkleidung von Fahrzeugen mit einer Außenoberfläche in Form einer unterschäumten Folie. Solche Armaturenbretter besitzen oft stark umgeformte Bereiche, die für Fahrer und Beifahrer direkt und permanent sichtbar sind. Dies gilt beispielsweise für die Instrumentenhaube, für das Handschuhfach und für Lüftungsdüsen und -ausschnitte. Hier ist eine Vergleichmäßigung der Dehnungen, wie sie durch das erfindungsgemäße Verfahren in der Folie erreicht wird, aus ästhetischen Gründen besonders wichtig.

## Patentansprüche

1. Verfahren zur Herstellung einer thermoplastischen Folie mit einer dreidimensional strukturierten Oberfläche, wobei die bereits in einem vorlaufenden Formgebungsschritt mit einer Oberflächenstruktur versehene Folie einem nachfolgenden formgebenden Verarbeitungsschritt unterworfen wird, **dadurch gekennzeichnet, dass** die Folie vor dem nachfolgenden formgebenden Verarbeitungsschritt einer Elektronenstrahlvernetzung unterworfen wird, die einzelne flächige Bereiche der Folie unterschiedlich und im Wesentlichen auf eine solche Weise vernetzt, dass die Bereiche, die bei dem nachfolgenden formgebenden Verarbeitungsschritt höheren Auszugsgraden unterworfen werden, andere Vernetzungsgrade aufweisen als ihre Nachbarbereiche.

2. Verfahren nach Anspruch 1, **dadurch gekennzeichnet, dass** die Bereiche, die bei dem nachfolgenden formgebenden Verarbeitungsschritt höheren Auszugsgraden unterworfen werden, höhere Vernetzungsgrade aufweisen als ihre Nachbarbereiche

3. Verfahren nach Anspruch 1 oder 2, **dadurch gekennzeichnet, dass** die Elektronenstrahlvernetzung beidseitig der Folie erfolgt, wobei die Vernetzungsgrade auf den beiden Folienseiten bzw. Folienoberflächen unterschiedlich hoch sind.

4. Verfahren nach Anspruch 1 bis 3, **dadurch gekennzeichnet, dass** die Elektronenstrahlvernetzung der Folie durch eine mindestens bereichsweise mehrfache Bestrahlung mindestens einer Folienoberfläche mit einer Elektronenstrahlquelle erfolgt.

5. Verfahren nach Anspruch 1 bis 4, **dadurch gekennzeichnet, dass** die Elektronenstrahlvernetzung der Folienoberfläche strichweise nacheinander durchgeführt wird, wobei die Strahlbreite des Elektronenstrahls mit Hilfe einer Blende einstellbar ist.

6. Verfahren nach Anspruch 1 bis 5, **dadurch gekennzeichnet, dass** zwischen der der Elektronenstrahlquelle und der bestrahlten Folienoberfläche eine Maske angeordnet ist, die die Intensität der Elektronenstrahlung mindestens in Teilbereichen des Strahlquerschnitts verändert.

7. Verfahren nach einem der Ansprüche 1 bis 6, bei dem eine Folie einer Dicke von 0,4 bis 4 mm eingesetzt wird.

8. Verfahren nach einem der Ansprüche 1 bis 7, bei dem die Vernetzung der Folie so eingestellt wird, dass die Folie in den Bereichen, die bei dem nachfolgenden formgebenden Verarbeitungsschritt höheren Auszugsgraden unterworfen werden, einen Gelgehalt von mindestens 30 % aufweist.

9. Verfahren nach einem der Ansprüche 1 bis 8, bei dem die Vernetzung der Folie so eingestellt wird, dass die Folie einen Unterschied im Gelgehalt zwischen hoch- und niedrig vernetzten Bereichen der Folie von 10 und 60 %, aufweist.

## Claims

1. Process for producing a thermoplastic film having a three-dimensionally structured surface, the film already provided with a surface structure in a preceding shaping step being subjected to a subsequent shape-imparting processing step, **characterized in that** the film is subjected, before the subsequent shape-imparting processing step, to electron beam crosslinking which crosslinks the individual regions of the film differently and substantially in a manner such that the regions which are subjected to higher degrees of drawing in the subsequent shape-imparting processing step have degrees of crosslinking differing from their neighboring regions.

2. Process according to Claim 1, **characterized in that** the regions which are subjected to higher degrees of drawing in the subsequent shape-imparting processing step have higher degrees of crosslinking than their neighboring regions.

3. Process according to Claim 1 or 2, **characterized in that** the electron beam crosslinking is effected on both sides of the film, the degrees of crosslinking on the two film sides or film surfaces being different.

4. Process according to Claims 1 to 3, **characterized in that** the electron beam crosslinking of the film is effected by irradiation of at least one film surface with an electron beam source several times at least in regions.

5. Process according to Claims 1 to 4, **characterized in that** the electron beam crosslinking of the film surface is carried out line by line in succession, the beam width of the electron beam being adjustable with the aid of an aperture.

6. Process according to Claims 1 to 5, **characterized in that** a mask which changes the intensity of the electron radiation at least in partial regions of the beam cross section is arranged between the electron beam source and the irradiated film surface.

7. Process according to any of Claims 1 to 6, in which a film having a thickness of from 0.4 to 4 mm is used.

8. Process according to any of Claims 1 to 7, in which the crosslinking of the film is adjusted such that, in the regions which are subjected to higher degrees of drawing in the subsequent shape-imparting processing step, the film has a gel content of at least 30%.

9. Process according to any of Claims 1 to 8, in which the crosslinking of the film is adjusted such that the film has a difference in the gel content between regions of the film which have a high degree of crosslinking and a low degree of crosslinking of from 10 to 60%.

## Revendications

1. Procédé de fabrication d'une feuille thermoplastique à surface structurée tridimensionnellement, selon lequel la feuille déjà munie d'une structure de surface lors d'une étape de façonnage antérieure est soumise à une étape d'usinage façonnante ultérieure, **caractérisé en ce que** la feuille est soumise à une réticulation par faisceau d'électrons avant l'étape d'usinage façonnante ultérieure, qui réticule des zones plates individuelles de la feuille différemment et essentiellement de sorte que les zones soumises lors de l'étape d'usinage façonnante ultérieure à des degrés d'étirage plus élevés présentent des degrés de réticulation différents de leurs zones voisines.

2. Procédé selon la revendication 1, **caractérisé en ce que** les zones soumises lors de l'étape d'usinage façonnante ultérieure à des degrés d'étirage plus élevés présentent des degrés de réticulation plus élevés que leurs zones voisines.

3. Procédé selon la revendication 1 ou 2, **caractérisé en ce que** la réticulation par faisceau d'électrons a lieu des deux côtés de la feuille, les degrés de réticulation étant différents sur les deux côtés de la feuille ou surfaces de la feuille.

4. Procédé selon les revendications 1 à 3, **caractérisé en ce que** la réticulation par faisceau d'électrons de la feuille a lieu par une exposition multiple au moins par zones d'au moins une surface de la feuille à une source de faisceau d'électrons.

5. Procédé selon les revendications 1 à 4, **caractérisé en ce que** la réticulation par faisceau d'électrons de la surface de la feuille est réalisée successivement par endroits, la largeur du faisceau d'électrons étant ajustable à l'aide d'un diaphragme.

6. Procédé selon les revendications 1 à 5, **caractérisé en ce qu'**un masque est agencé entre la source de faisceau d'électrons et la surface de la feuille exposée, qui modifie l'intensité du faisceau d'électrons au moins dans des zones partielles de la section du faisceau.

7. Procédé selon l'une quelconque des revendications 1 à 6, dans lequel une feuille d'une épaisseur de 0,4 à 4 mm est utilisée.

8. Procédé selon l'une quelconque des revendications 1 à 7, dans lequel la réticulation de la feuille est ajustée de sorte que la feuille présente une teneur en gel d'au moins 30 % dans les zones soumises lors de l'étape d'usinage façonnante ultérieure à des degrés d'étirage plus élevés.

9. Procédé selon l'une quelconque des revendications 1 à 8, dans lequel la réticulation de la feuille est ajustée de sorte que la feuille présente une différence au niveau de la teneur en gel entre les zones hautement et faiblement réticulées de la feuille de 10 et 60 %.
